## Europäisches Patentamt
## European Patent Office
## Office européen des brevets

(19)

(11) Veröffentlichungsnummer : **0 139 943**
**B1**

(12)

# EUROPÄISCHE PATENTSCHRIFT

(45) Veröffentlichungstag der Patentschrift :
28.09.88

(21) Anmeldenummer : 84109582.1

(22) Anmeldetag : 11.08.84

(51) Int. Cl.⁴ : **F 16 K 47/00**

(54) **Drosselvorrichtung.**

(30) Priorität : 24.08.83 DE 8324276 U

(43) Veröffentlichungstag der Anmeldung :
08.05.85 Patentblatt 85/19

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
US-A- 2 572 950
US-A- 4 205 822
US-A- 4 380 250

(73) Patentinhaber : Festo KG
Ulmer Strasse 48
D-7300 Esslingen a.N. (DE)

(72) Erfinder : Stoll, Kurt, Dipl.-Ing.
Lenzhalde 72
D-7300 Esslingen (DE)
Erfinder : Glättli, Hans-Heinrich, Dipl.Phys.
Seestrasse 252
CH-8700 Küsnacht (CH)

(74) Vertreter : Magenbauer, Rudolf, Dipl.-Ing. et al
Patentanwälte Dipl.-Ing. Rudolf Magenbauer Dipl.-
Phys. Dr. Otto Reimold Hölderlinweg 58
D-7300 Esslingen (DE)

**Beschreibung**

Die Erfindung betrifft eine Drosselvorrichtung mit einem einen Grundkörper und einen Deckel aufweisenden Gehäuse mit einer Zuströmleitung und einer Ausgangsöffnung, zwischen denen angeordnet ist eine von außen her betätigbare und hierbei durch Verdrehen einstellbare Regeleinrichtung mit einer Einstellscheibe, die eine durchgehende, mit der Zuströmleitung kommunizierende Bohrung aufweist und gegenüber einer im Gehäuse angeordneten und an ihr dicht anliegenden Auflagescheibe mit einer Bohrung relativ verdrehbar ist, wobei diese Bohrung einerseits über einen zwischen der Einstell- und der Auflagescheibe ausgebildeten Kanal mit der Bohrung der Einstellscheibe und andererseits mit der Ausgangsöffnung kommuniziert, wobei der Kanal sich um die gemeinsame Drehachse der Einstellscheibe· und der Auflagescheibe um weniger als eine Umdrehung erstreckt und einen sich über die Länge ändernden Strömungsquerschnitt besitzt, und mit einem zur dichten Halterung der Scheibe dienenden Schaft (z. B. US-A- 4 380 250).

Bei bekannten Drosselvorrichtungen eingangs genannter Art erfolgt die Einstellung der Regeleinrichtung mittels eines nach außen hin ragenden, eine Drehscheibe aufweisenden Schaftes, der den Deckel des Gehäuses durchquert. Die Zuströmleitung und die Ausgangsöffnung für das Medium sind im Grundkörper ausgebildet, und zwar derart, daß die eine der beiden Leitungen axial mit Bezug auf den Schaft verläuft, während die andere, gewöhnlich die Zuströmleitung, seitlich in eine Vorkammer des Gehäuses einmündet. Somit ergibt sich eine Bauweise, bei der die im Grundkörper des Gehäuses ausgebildete Einmündung der Zuströmleitung mit Abstand zur Ausmündung der ebenfalls im Grundkörper ausgebildeten Ausgangsöffnung angeordnet ist. Eine Verringerung des Abstandes zwischen den beiden Öffnungen, um die für das Medium vorgesehenen, mit dem Gehäuse verbindbaren Leitungen möglichst an einer zentralen Stelle des Gehäuses zusammenfassen zu können, würde eine noch robustere Bauweise des Gehäuses erforderlich machen, da z. B. die Zuströmleitung sich nicht nur in der unteren Partie des Grundkörpers, sondern auch seitlich erstrecken würde. In vielen Fällen ist es erforderlich, mehrere Drosselvorrichtungen möglichst am engsten Raum anzubringen, dies ist jedoch bei den bekannten Drosselvorrichtungen nicht ohne weiteres möglich, vor allem wegen deren robuster Bauweise und dezentraler Zuführung der Leitungen für das Medium. Bei einer Vorrichtung, die mit mehreren derartigen Drosseln mit Druckmedium versorgt werden soll, besteht überdies die Gefahr einer Vertauschung einzelner Leitungen. Die Auswechslung einzelner zu einem Block zusammengefaßter Drosselvorrichtungen ist wegen der Unübersichtlichkeit der Verkabelung ebenfalls kompliziert.

Ausgehend von dem obigen Stand der Technik hat sich die vorliegende Erfindung die Aufgabe gestellt, eine Drosselvorrichtung eingangs genannter Art zu schaffen, bei der bei kompakter und kleiner Bauweise die Verbindung mit den externen Leitungen für das Druckmedium praktisch zentral erfolgen kann.

Die gestellte Aufgabe wird bei einer Drosselvorrichtung eingangs genannter Art erfindungsgemäß dadurch gelöst, daß die Zuströmleitung im Schaft ausgebildet ist und daß die Einstellscheibe in radialer Richtung sowohl an dem Schaft als auch an dem mit ihr unverdrehbar verbundenen Gehäusedeckel gasdicht angreift.

Bei der erfindungsgemäßen Drosselvorrichtung ist der Deckel des Gehäuses Teil der Regeleinrichtung, und die Anschlüsse für die Zuström- und Abströmleitung können ohne weiteres mit geringstem Abstand zueinander angeordnet werden. Da die Leitungen für das Druckmedium nur den Grundkörper durchqueren, können nicht nur die axialen, sondern auch die radialen Abmessungen des Gehäuses deutlich reduziert werden. Die zusätzliche, für die Zuströmleitung vorgesehene Öffnung bedeutet jedoch keine Materialschwächung des Grundkörpers, da sie im Schaft ausgebildet ist, der gewöhnlich aus Metall besteht. Die jederzeit überschaubare Verbindungsstelle zwischen dem Grundkörper und den Leitungen erlaubt somit, eine Vielzahl von Drosselvorrichtungen am engsten Raum anzubringen. Nicht zuletzt ist auch hervorzuheben, daß die erfindungsgemäße Drosselvorrichtung trotz Verringerung ihrer Maße besser betätigbar ist, da die Einstellung der Regeleinrichtung direkt durch den Deckel des Gehäuses erfolgt.

Weitere vorteilhafte Maßnahmen der Erfindung gehen aus den Unteransprüchen hervor.

Eine zweckmäßige Maßnahme der Erfindung sieht vor, daß die Zuströmleitung den Schaft axialseitig durchzieht, wobei die axialen Endpartien der als Bohrung ausgebildeten Zuströmleitung Gewinde aufweisen. Hierbei kann die Anordnung auch so getroffen sein, daß die Gewinde gleiches Profil aufweisen. Auf diese Weise wird die Variabilität der Drosselvorrichtung verbessert, da die Drosselvorrichtung auch direkt in die Leitung geschaltet werden kann, welche die Druckmediumquelle mit dem Verbraucher verbindet. Hierbei versteht es sich, daß jeweils ein axiales Ende des Schaftes druckdicht abgeschlossen ist. Um die axialen Enden des Schaftes abschließen bzw. sie mit externen Leitungen verbinden zu können, sieht eine weitere Maßnahme der Erfindung vor, daß die Gewinde in mit dem Schaft drehfest verbundenen Gewindeeinsätzen ausgebildet sind, wobei zwischen dem Schaft und den Gewindeeinsätzen axial verlaufende Dichtungseinsätze angeordnet sind. Die Verbindung der Drosselvorrichtung mit externen Leitungen kann zweckmäßigerweise auch so erfolgen, daß in die Zuströmleitung ein mit einer Mediumleitung verbindbarer Zustrom-Nippel und in die Ausgangsöffnung ein Abstrom-Nippel einschraubbar ist.

Wenn der Deckel becherförmig ausgebildet ist und den Grundkörper zumindest teilweise umschließt, so kann das Manipulieren, insbesondere das Einstellen der Regeleinrichtung merklich verbessert werden, da für die Betätigung praktisch der wesentliche Teil des Gehäuses zur Verfügung steht, so daß trotz der Tatsache, daß die Drosselvorrichtung sehr klein gebaut werden kann, die Betätigung der Drosselvorrichtung noch besser ist als bei den herkömmlichen Drosselvorrichtungen.

Der innere Aufbau der Regeleinrichtung kann dadurch verbessert werden, daß zwischen der Einstellscheibe und dem Deckel eine Kammer ausgebildet ist, in der eine die Einstellscheibe gegen die Abdeckscheibe drückende Feder angebracht ist. Auf diese Weise wird eine druckdichte Verbindung zwischen der Auflagescheibe und der Dichtscheibe, deren einander zugewandten Flächen gewöhnlich plan ausgebildet sind, gewährleistet. Die einander zugewandten Seiten der beiden Scheiben können selbstverständlich auch anders geformt sein, z. B. kalottenförmig, es muß nur gewährleistet sein, daß beim Verdrehen bzw. Einstellen der Regeleinrichtung sich der Strömungsquerschnitt ändert.

Eine weitere zweckmäßige Maßnahme der Erfindung sieht vor, daß der Schaft mit dem Grundkörper fest verbunden ist, während der Deckel am Schaft gasdicht verdrehbar und axial unverrückbar angeordnet ist. Durch diese Maßnahme wird erreicht, daß für den Zusammenbau der Drosselvorrichtung keine zusätzlichen Schrauben und andere Befestigungsmittel erforderlich sind. Eine kompaktere Bauweise bei der Drosselvorrichtung kann auch dadurch erreicht werden, daß der Grundkörper sich nach innen zu in das Gehäuse verjüngt und die Ausnehmung des Deckels sich zum Grundkörper hin erweitert, derart, daß die Ummantelung des Deckels stufenlos in die Ummantelung des Grundkörpers übergeht. Hierbei kann die Anordnung auch so getroffen sein, daß der Grundkörper sich stufenförmig verjüngt und der Deckel stufenförmig und hierzu komplementär erweitert. Durch diese Maßnahme wird u. a. auch verhindert, daß in das Gehäuse von außen her Verunreinigungen eindringen.

Um die Drosselvorrichtung mit anderen Bauteilen einfach verbinden zu können, sieht eine zweckmäßige Maßnahme der Erfindung vor, daß die axiale Außenseite des Grundkörpers Bohrungen mit Gewinde aufweist, in die eine Grundplatte durchquerende Schrauben einschraubbar sind. Somit kann die Drosselvorrichtung z. B. mit einer Frontplatte ortsfest ohne weiteres verbunden werden. Diese Verbindung kann ferner so verbessert werden, daß die Grundplatte konzentrische Bohrungen und eine zentrale Bohrung aufweist, die der mit dem Schaft verschraubbare Zustrom-Nippel durchqueren kann.

Die gasdichte Verbindumg des Schaftes mit dem Grundkörper und der Einstellscheibe sowie mit dem Deckel kann mit Dichtringen versehenen Nuten erreicht werden, die in Umfangsrichtung des Schaftes ausgebildet sind.

Da bis auf den Schaft die wesentlichen Teile des Gehäuses aus Kunststoff bestehen können, kann die Verbindung des Schaftes mit dem Grundkörper, der durch Spritzen herstellbar ist, sehr einfach hergestellt werden.

Man erkennt, daß die erfindungsgemäße Drossel besonders einfach und gut an Frontplatten befestigt werden kann, eine Schaltschrankmontage mit Zubehör ist jedoch auch möglich. Mit der Drossel können sowohl Flüssigkeiten als auch Gase mit hoher Genauigkeit gedrosselt werden.

Nachfolgend wird die Erfindung anhand eines in der Zeichnung dargestellten Ausführungsbeispiels näher erläutert. Es zeigen :

Fig. 1 einen Längsschnitt durch eine erfindungsgemäße Drosselvorrichtung,

Fig. 2 eine Explosionsdarstellung der erfindungsgemäßen Vorrichtung,

Fig. 3 eine vertikale Draufsicht auf eine Abdeckscheibe und

Fig. 4 eine Draufsicht auf den Grundkörper in Richtung des Pfeiles IV nach Fig. 3.

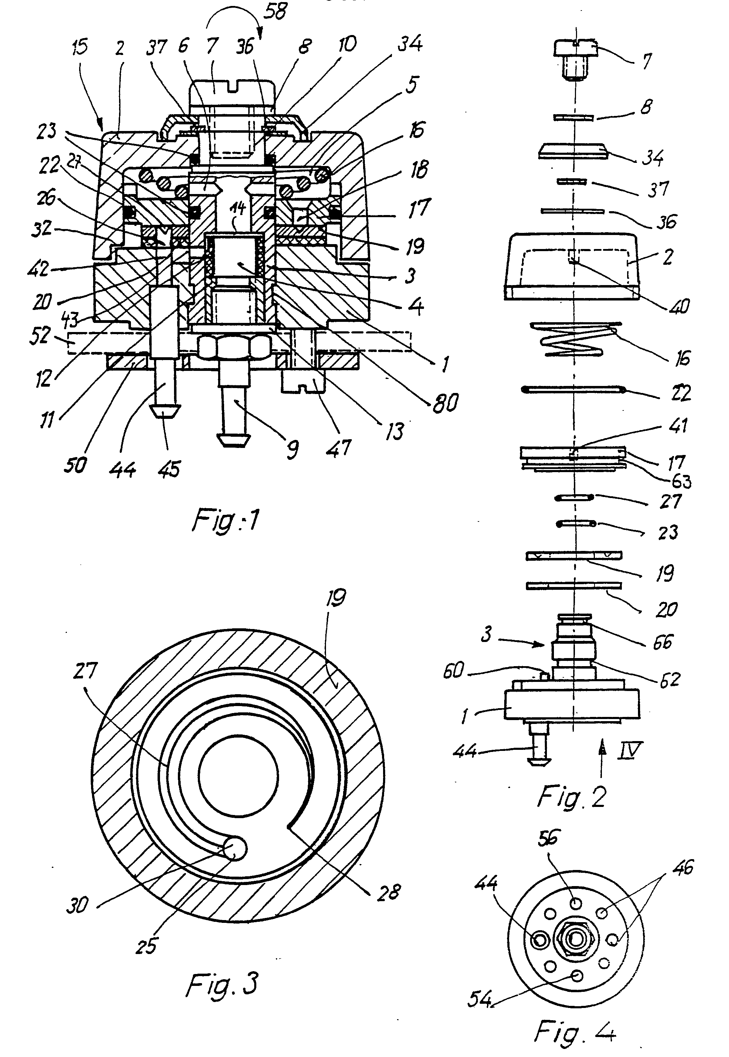

Die Drosselvorrichtung besteht aus zwei Gehäuseteilen 1 und 2, wobei das Gehäuseteil 2 als Deckel, während das Gehäuseteil 1 als Grundkörper ausgebildet ist. Der Grundkörper 1 ist mit dem Deckel 2 mittels eines Schaftes 3 verbunden, der zentral zum Gehäuse angeordnet ist und sich axialseitig durch das Gehäuse erstreckt. Der Schaft 3 ist mit dem Grundkörper 1 mittels einer Nut-Feder-Anordnung drehfest und mit dem Deckel 2 drehbar und dicht verbunden. Im axial angeordneten Schaft 3 ist eine Zuströmleitung 4 ausgebildet, die in eine Vorkammer 5 über Bohrungen 6 mündet. Das obere axiale Ende der Zuströmbohrung 4 ist in diesem Ausführungsbeispiel mittels einer Schraube 7 und einer Dichtung 8 gasdicht abgeschlossen. Die Einmündung der Zuströmleitung 4, die in Fig. 1 unten dargestellt ist, ist mit einem Zustrom-Nippel 9 bestückt, der in die Zuströmleitung 4 einschraubbar ist. Die axial endseitig in der Zuströmleitung 4 ausgebildeten Gewinde weisen gleiches Profil auf, so daß der Zustrom-Nippel 9 und die Schraube 7 vertauschbar sind. Das Gewinde 10 ist nicht direkt am Schaft, sondern in einem Gewindeeinsatz 11 ausgebildet, wobei zwischen dem Schaft 3 und dem Gewindeeinsatz 11 axial Dichtungseinsätze 12 angeordnet sind. Der vom Gewindeeinsatz 11 des Zustrom-Nippels 9 getragene Dichtungseinsatz 12 ist so ausgebildet, daß zwischen ihm und dem Schaft 3 in axialer Richtung ein Ringspalt 14 vorhanden ist. Der Dichtungseinsatz 12 besteht aus einem weichen, gummiähnlichen Material, das sich beim Beaufschlagen der Zuströmleitung an die radiale Innenseite der Bohrung 6 dicht anlehnt. Da im Grundkörper 1 und im Bereich des Dichtungseinsatzes 12 des Schaftes 3 eine die Zuströmleitung 4 und die Ausgangsöffnung 42 verbindende Bohrung 43 ausgebildet ist, kann der Dichtungseinsatz 12 als Rückschlagventil dienen. Hiermit kann auch die Entlüftung des Verbrauchers beschleunigt werden, weil das Medium durch zwei Kanäle zurückströmen kann.

Zwischen dem Zustrom-Nippel 9 und dem Schaft 3 ist eine weitere Dichtung 13 angeordnet. Somit ist gewährleistet, daß das bei 9 zugeführte Druckmedium über die Zuströmleitung 4 und die Bohrung 6 in die Vorkammer 5 gelangen kann. In der Vorkammer 5 ist eine insgesamt mit 15 bezeichnete Regeleinrichtung angeordnet, die aus einer Feder 16, einer Einstellscheibe 17 mit einer Bohrung 18, einer Auflagescheibe 19 und einer Abdeckscheibe 20 besteht. Der Gehäusedeckel 2, der am Schaft 3 druckdicht verdrehbar ist, ist mit der Einstellscheibe 17 über eine Dichtung 22 druck- und drehfest verbunden. Die Einstellscheibe 17 ist ihrerseits mit dem Schaft 3 drehbar und druckdicht verbunden, da zwischen ihr und dem Schaft 3 eine Dichtung 23 angeordnet ist. Die Auflagescheibe 19 ist mit dem Grundkörper 1 mittelbar über die Abdeckscheibe 20 verbunden, die eine mit der Bohrung 25 der Auflagescheibe fluchtende Bohrung 26 aufweist. Zwischen der Einstellscheibe 17 und der Abdeckscheibe 20 ist ein Kanal 27 vorhanden, in diesem Ausführungsbeispiel ist er, wie aus Fig. 3 deutlich hervorgeht, in der Auflagescheibe 19 ausgebildet.

Wie besonders deutlich aus der Fig. 3 ersichtlich ist, geht der Kanal 27 in die Bohrung 25 über. Der Kanal 27 ist im Querschnitt dreieckförmig ausgebildet, wobei sich seine Tiefe und die Breite oder Länge der Dreieckseite an der der Einstellscheibe 17 zugewandten Seite der Auflagescheibe 19 von der Bohrung 25 an bis an sein Ende 28 verringert. Der Kanal 27 ist etwa schraubenförmig ausgebildet und so lang, daß — gemäß Fig. 3. — vom Maximalwert an der Stelle 30 bis zum Minimalwert an der Stelle 28 etwa eine 3/4-Umdrehung an dem Deckel 2 erforderlich ist. Wird der Deckel noch etwas weiter gedreht, so ist der Durchgang durch die Drosselvorrichtung abgesperrt. Das Ende der Drehbewegung wird dabei durch eine Nocke 32 des Grundkörpers 1 bestimmt.

Da sich der Deckel 2 am Schaft 3 innenseitig an einer Stufe 33 abstützen kann und andererseits von einem becherförmigen Haltering 34, der mit dem Schaft ortsfest verbunden ist, gehalten wird, ist eine axiale Verschiebung des Deckels 2 nicht möglich. Unter dem Haltering 34 ist noch ein Auflagering 36 sowie ein Sprengring 37 angeordnet. Nicht zu entnehmen ist eine auf der vertikalen Oberseite des Deckels 2 ausgebildete Skala, die sich in Umfangsrichtung des Schaftes 3 erstreckt. Man kann also den eingestellten Wert ablesen. Da das radialseitige Ende des Halterings 34 in eine Nut 38 des Deckels 2 hineinragt, wird ein Ansammeln von Schmutz im Bereich des Sprengrings 37 verhindert. Wie aus Fig. 1 ferner zu entnehmen ist, ist der Deckel 2 becherförmig ausgebildet und umschließt den Grundkörper 1 in seinem unteren Bereich. Da sich der Grundkörper 1 in das Gehäuseinnere hin zu stufenförmig verjüngt und der Deckel 2 in diesem Bereich des Grundkörpers 1 sich stufenförmig erweitert, weist das Gehäuse eine im wesentlichen zylinderförmige Umhüllung auf.

Die unverdrehbare Verbindung des Deckels 2 mit der Einstellscheibe 17 wird zusätzlich durch eine Stift-Nut-Verbindung verbessert, wie aus Fig. 2 hervorgeht. Der Stift 40 ragt beim Zusammenbauen der Drosselvorrichtung in die Nut 41 der Einstellscheibe 17 hinein. Die Einstellscheibe 17 liegt satt auf der Auflagescheibe 19 auf, und zwar nicht nur wegen der planen Ausbildung der Einstellscheibe 17 und der Auflagescheibe 19, sondern auch wegen der Druckwirkung der Feder 16. Die Abdeckscheibe 20 besteht aus gummiähnlichem Material, so daß eine gasdichte Verbindung zwischen der Auflagescheibe 19 und der Abdeckscheibe 20 gewährleistet ist. Die Bohrung 26 der Abdeckscheibe 20 fluchtet mit der Ausgangsöffnung 42, die im Grundkörper 1 ausgebildet ist. In die Ausgangsöffnung 42 ist von derselben Stirnseite des Gehäuses ein abgehender, mit dem Zustrom-Nippel 9 parallel verlaufender Ausgangsnippel 44 einschraubbar, dessen anderes Ende einen angeformten Ring 45 aufweist, so daß Verbindungen mit Leitungen ohne weiteres herstellbar sind. Ähnlichen Ring weist auch der Zustrom-Nippel 9 auf.

In der axialen Außenseite des Grundkörpers sind mehrere Gewinde aufweisende Bohrungen (Fig. 4) 46 ausgebildet, in die Schrauben 47 eingeschraubt werden können. Diese Schrauben bilden zusammen mit einer Grundplatte 50 eine Halterung, wenn die Drosselvorrichtung z. B. mit einer bei 52 angedeuteten Frontplatte verbunden werden soll. In der axialen Außenseite des Grundkörpers 1 sind noch weitere Bohrungen 54, 56 ausgebildet, in die nach Bedarf weitere Ausgangsnippel eingeschraubt werden können. In diesem Ausführungsbeispiel sind die Bohrungen 54, 56 mit nicht näher dargestellten Stopfen versehen, sie sind also gasdicht abgeschlossen.

Da das Gewinde des Zustrom-Nippels 9 und das Gewinde der Schraube 7 gleiches Profil haben, sind die beiden Bauteile austauschbar, so daß die Drosselvorrichtung auch in eine Leitung geschaltet werden kann, die eine Druckmediumquelle mit dem Verbraucher direkt verbindet.

Die erfindungsgemäße Drosselvorrichtung funktioniert wie folgt:

Der Zustrom-Nippel 9 wird mit einer mit einer Druckmediumquelle verbundenen Leitung verbunden, während der Ausgangsöffnungs-Nippel 44 mit einer an einen Verbraucher angeschlossenen Leitung verbunden wird. Das bei 9 zugeführte Druckmedium gelangt über die Zuströmleitung 4 und die radialseitig ausgerichtete Bohrung 6 in die Vorkammer 5, aus der sie über die Bohrung 18 in den Kanal 27 geleitet wird. Wenn die Bohrung 18 mit der Bohrung 25 der Auflagescheibe 19 kommuniziert, wenn also der Deckel 2 in seiner ersten Endlage bezüglich seiner Verschraubung ist, erfolgt praktisch keine Drosselung des Mediums, wenn man vom Widerstand der einzelnen Kanäle absieht. Wenn man nun, angenommen, daß die Einstellscheibe 17 sich in ihrer Anfangsposition befindet, wo ihre Bohrung 18 mit der Bohrung 25 der Auflagescheibe fluchtet, das Gehäuseteil 2 in Richtung des Pfeiles 58 verdreht, verringert man den effektiven Durchströmquerschnitt, der durch den Querschnitt des Kanales 27 definiert ist, der Drosselvorrichtung. Der Deckel 2 kann um einen Winkel verdreht werden, der zwar kleiner ist als 360°, jedoch größer als die Winkellänge des Kanals 27. In der zweiten Endlage des Deckels 2 befindet sich die Bohrung 18 der Einstellscheibe 17 im kanalfreien Bereich der Auflagescheibe 19. In dieser Stellung des Deckels 2 bzw. der Einstellscheibe 17 ist der Durchfluß des Mediums unterbrochen.

Daß man mit der erfindungsgemäßen Vorrichtung genau reproduzierbare Durchflußmengen einstellen kann, muß nicht näher erläutert werden.

Die Figur 2 läßt erkennen, daß auch der Zusammenbau der Drosselvorrichtung äußerst einfach ist, da man den Grundkörper 1, der gewöhnlich aus Kunststoff hergestellt wird, schon beim Spritzen mit dem Schaft 3 drehfest verbinden kann. Der Grundkörper 1 bzw. der Schaft 3 werden daraufhin mit der Abdeckscheibe 20, die über einen Stift 60 mit dem Grundkörper 1 drehfest verbindbar ist, mit der Auflagescheibe 19 sowie mit den Dichtringen 23, die in die Nuten 62 eingelegt werden, bestückt. Sodann wird die Einstellscheibe 17 mit dem Schaft 3 verbunden, in deren Nut 63 zuvor der Dichtring 22 eingelegt wurde. Nachdem die Einstellscheibe 17 mit der Auflagescheibe 19 verbunden worden ist, wird die Feder 16 eingelegt, die sodann mit dem Deckel 2 zusammengedrückt wird. Hierbei muß so vorgegangen werden, daß der Stift 40 in die Nut 41 einrastet. Schließlich werden noch der Dichtring 36 sowie der Sprengring 37 mit dem Schaft 3 verbunden, wobei der Sprengring 37 in die Nut 66 einrastet. Zuletzt wird noch der Abdeckring 34 mit dem Schaft 3 z. B. durch Warmpressen verbunden. Die Schraube 7 und die Dichtung 8 werden ebenfalls mit dem Schaft 3 verbunden, um zu verhindern, daß das Druckmedium ins Freie strömt.

**Patentansprüche**

1. Drosselvorrichtung mit einem einen Grundkörper (1) und einen Deckel (2) aufweisenden Gehäuse mit einer Zuströmleitung (4) und einer Ausgangsöffnung (42), zwischen denen angeordnet ist eine von außen her betätigbare und hierbei durch Verdrehen einstellbare Regeleinrichtung (15) mit einer Einstellscheibe (17), die eine durchgehende, mit der Zuströmleitung kommunizierende Bohrung (18) aufweist und gegenüber einer im Gehäuse angeordneten und an ihr dicht anliegenden Auflagescheibe (19) mit einer Bohrung (25) relativ verdrehbar ist, wobei diese Bohrung (25) einerseits über einen zwischen der Einstell- und der Auflagescheibe ausgebildeten Kanal (27) mit der Bohrung (18) der Einstellscheibe (17) und andererseits mit der Ausgangsöffnung (42) kommuniziert, wobei der Kanal sich um die gemeinsame Drehachse der Einstellscheibe (17) und der Auflagescheibe (19) um weniger als eine Umdrehung erstreckt und einen sich über die Länge ändernden Strömungsquerschnitt besitzt, und mit einem zur dichten Halterung der Scheibe dienenden Schaft (3), dadurch gekennzeichnet, daß die Zuströmleitung (4) im Schaft (3) ausgebildet ist, z. B. indem sie ihn axial durchzieht, und daß die Einstellscheibe (17) in radialer Richtung sowohl an dem Schaft (3) als auch an dem mit ihr unverdrehbar verbundenen Gehäusedeckel (2) gasdicht angreift.

2. Drosselvorrichtung nach Anspruch 1, dadurch gekennzeichnet, daß die axialen Endpartien der als Bohrung ausgebildeten Zuströmleitung (4) z. B. gleiches Profil besitzende Gewinde (10) aufweisen, wobei z. B. die Gewinde (10) in mit dem Schaft (3) drehfest verbundenen Gewindeeinsätzen (11) ausgebildet sein können.

3. Drosselvorrichtung nach Anspruch 2, dadurch gekennzeichnet daß zwischen dem Schaft (3) und dem im Bereich des Grundkörpers (1) angeordneten Gewindeeinsatz (11) ein hohlzylinderförmiger Dichtungseinsatz (12) angeordnet ist, wobei zwischen der dem Gewindeeinsatz (11) abgewandten Stirnseite des Dichtungseinsatzes (12) und dem mit dem Grundkörper (1) fest verbundenen Schaft (3) ein Ringspalt (14) ausgebildet ist.

4. Drosselvorrichtung nach einem der Ansprüche 1 bis 3, dadurch gekennzeichnet, daß der Deckel (2) becherförmig ausgebildet ist und den Grundkörper (1) zumindest teilweise umschließt und daß zwischen der Einstellscheibe (17) und dem Deckel (2) eine Vorkammer (5) ausgebildet ist, in der eine die Einstellscheibe (17) gegen die Auflagescheibe (17) drückende Feder (16) angeordnet ist, wobei zweckmässigerweise zwischen der Auflagescheibe (19) und dem Grundkörper (1) eine Dichtungsscheibe (20) angeordnet sein kann.

5. Drosselvorrichtung nach einem der Ansprüche 1 bis 4, dadurch gekennzeichnet, daß der Deckel (2) am Schaft (3) gasdicht verdrehbar und axial unverrückbar angeordnet ist.

6. Drosselvorrichtung nach einem der Ansprüche 1 bis 5, dadurch gekennzeichnet, daß im Grundkörper (1) und im Bereich des Dichtungseinsatzes (12) des Schaftes (3) eine die Zuströmleitung (4) und die Ausgangsöffnung (42) verbindende Bohrung (43) ausgebildet ist.

7. Drosselvorrichtung nach einem der Ansprüche 1 bis 6, dadurch gekennzeichnet, daß der Grundkörper (1) sich nach innen zu in das Gehäuse hinein verjüngt und die Ausnehmung des Deckels (2) sich zum Grundkörper (1) hin erweitert, derart, daß die Ummantelung des Deckels (2) stufenlos in die Ummantelung des Grundkörpers (1) übergeht, wobei z. B. der Grundkörper (1) sich stufenförmig verjüngen und der Deckel (2) sich stufenförmig erweitern kann.

8. Drosselvorrichtung nach einem der Ansprüche 1 bis 7, dadurch gekennzeichnet, daß der Grundkörper (1) axiale Gewindebohrungen (46) aufweist, die von der dem Deckel abgewandten Grundkörperseite ausgehen und in die eine zur Befestigung der Vorrichtung dienende Grundplatte (50) durchquerende Schrauben (47) einschraubbar sind, wobei zweckmässigerweise die Grundplatte (50) zur Mittellängsachse konzentrisch angeordnete Bohrungen (54, 56) und eine zentrale Bohrung aufweisen kann, die den mit dem Schaft (3) verschraubbaren Zustrom-Nippel (9) aufnimmt.

9..Drosselvorrichtung nach einem der Ansprüche 1 bis 8, dadurch gekennzeichnet, daß in Umfangsrichtung des Schaftes (3) Nuten (62, 66, 80) ausgebildet sind, von denen eine (8) im Bereich des Grundkörpers (1) ausgebildet ist, wobei in sie eine Feder des Grundkörpers (1) eingreift.

10. Drosselvorrichtung nach einem der Ansprüche 1 bis 9, dadurch gekennzeichnet, daß der zentral zum Gehäuse (1, 2) angeordnete und sich in dessen Längsrichtung erstreckende Schaft (3) sowohl den Grundkörper (1) als auch den Deckel (2) durchquert, mit dem er zweckmässigerweise mittels einer Dichtung (36) und eines Sprengringes (37) verbunden sein kann, die von einem mit dem Schaft (3) drehfest verbundenen Haltering (34) nach außen hin abgedeckt sind.

## Claims

1. A restrictor with a housing comprising a base (1) and a top cover (2) and having an inflow line (4) and an outlet port (42), between which there is provided a control device (15) for external operation and adjustment by turning, comprising an adjusting disk (17) having a through-hole (18) communicating with the inflow line and being capable of rotation relative to a close-fitting supporting disk (19) with a bore (25) located in the housing, which bore (25) communicates, by means of a passage (27) formed between the adjusting disk and the supporting disk, with the throughhole (18) of the adjusting disk (17) on the one hand and with the outlet port (42) on the other hand, the passage extending around the common axis of rotation of the adjusting disk (17) and the supporting disk (19) by less than one complete revolution and having a tapering cross-section, and with a shaft (3) for the tight mounting of the disk, characterised in that the inflow line (4) is provided in the shaft (3), for instance extending axially therethrough, and in that there is a gas-tight radial seal between the adjusting disk (17) and the shaft (3) and between the adjusting disk (17) and the top cover (2) of the housing non-rotatably fixed thereto.

2. A restrictor according to Claim 1, characterised in that the axial end sections of the inflow line (4), which is designed as a bore, are provided with threads (10) which may have equal profiles, which threads (10) may, for instance, be provided in threaded inserts (11) non-rotatably fixed to the shaft (3).

3. A restrictor according to Claim 2, characterised in that a hollow-cylindrical sealing insert (12) is arranged between the shaft (3) and the threaded insert (11) located in the region of the base (1), an annular gap (14) being formed between the end face of the sealing insert (12) which is remote from the threaded insert (11) and the shaft (3) fixed to the base (1).

4. A restrictor according to any of Claims 1 to 3, characterised in that the top cover (2) is cup-shaped and at least partially encloses the base (1) and that a pre-chamber (5) is provided between the adjusting disk (17) and the top cover (2), in which a spring (16) pressing the adjusting disk (17) against the supporting disk (19) is incorporated, whereby a sealing ring or cover disk (20) may suitably be arranged between the supporting disk (19) and the base (1).

5. A restrictor according to any of Claims 1 to 4, characterised in that the top cover (2) is rotatably fitted to the shaft (3) to provide a gas-tight seal, at the same time being axially fixed thereto.

6. A restrictor according to any of Claims 1 to 5, characterised in that a bore (43) connecting the inflow line (4) to the outlet port (42) is provided in the base (1) and in the region of the sealing insert (12) of the shaft (3).

7. A restrictor according to any of Claims 1 to 6, characterised in that the base (1) tapers inwards into the housing and the recess of the top cover (2) expands towards the base, resulting in a continuous transition between the outside of the top cover (2) and the outside of the base (1), whereby the cross-section of the base (1) may, for instance, be reduced step-by-step, while that of the top cover (2) may be increased step-by-step.

8. A restrictor according to any of Claims 1 to 7, characterised in that the base (1) is provided with axial threaded bores (46) in that side which is remote from the top cover, into which bolts (47) passing through a base plate (50) can be inserted, the base plate (50) being usefully provided with bores (54, 56) concentricly arranged relative to its longitudinal axis and with a central bore through which the inflow nipple (9) to be bolted to the shaft (3) can pass.

9. A restrictor according to any of Claims 1 to 8, characterised in that grooves (62, 66, 80) are provided in the circumferential direction of the shaft (3), one (80) of which is formed in the region of the base (1) to engage a tongue of the base (1).

10. A restrictor according to any of Claims 1 to 9, characterised in that the shaft (3), which passes centrally and axially through the housing (1, 2) extends both through the base (1) and the top cover (2), to which it may suitably be fitted by means of a sealing ring (36) and a snap ring (39) enclosed by a retainer ring (34) non-rotatably fitted to the shaft (3).

## Revendications

1. Dispositif d'étranglement avec un boîtier présentant un corps de base (1) et un couvercle (2), avec une conduite d'amenée (4) et un orifice de sortie (42), entre lesquels est disposé un dispositif de régulation (15) actionnable de l'extérieur et réglable ainsi par rotation, dispositif qui comprend un disque de réglage (17) qui présente un alésage traversant (18) communiquant avec la conduite d'amenée et qui est rotatif par rapport à un disque d'appui (19) disposé dans le boîtier, s'appliquant hermétiquement contre le disque de réglage (17) et présentant un alésage (25), cet alésage (25) communiquant d'une part avec l'alésage (18) du disque de réglage (17) par l'intermédiaire d'un canal (27) formé entre le disque de réglage et le disque d'appui, et communiquant d'autre part avec l'orifice de sortie (42), ledit canal s'étendant sur moins d'un tour autour de l'axe de rotation commun du disque de réglage (17) et du disque d'appui (19) et possédant une section d'écoulement variable sur sa longueur, et avec une tige (3) servant à maintenir hermétiquement les disques, caractérisé en ce que la conduite d'amenée (4) est ménagée dans la tige (3), par exemple en traversant axialement cette dernière, et en ce que le disque de réglage (17) agit radialement et de manière étanche aux gaz tant sur la tige (3) que sur le couvercle de boîtier (2) qui est assemblé audit disque sans possibilité de rotation relative.

2. Dispositif d'étranglement selon la revendication 1, caractérisé en ce que les parties terminales axiales de la conduite d'amenée (4) réalisée sous la forme d'un alésage présentent des filets (10) possédant par exemple un profil identique, les filets (10) pouvant par exemple être formés dans des pièces rapportées filetées (11) assemblées solidairement en rotation à la tige (3).

3. Dispositif d'étranglement selon la revendication 2, caractérisé en ce qu'une pièce rapportée d'étanchéité (12) en forme de cylindre creux est disposée entre la tige (3) et la pièce rapportée filetée (11) disposée dans la région du corps de base (1), une fente annulaire (14) étant formée entre la tige (3) — assemblée fixement au corps de base (1) — et le côté frontal de la pièce rapportée d'étanchéité (12) qui est éloigné de la pièce rapportée filetée (11).

4. Dispositif d'étranglement selon l'une des revendications 1 à 3, caractérisé en ce que le couvercle (2) est réalisé en forme de godet et entoure au moins partiellement le corps de base (1), et en ce qu'une préchambre (5) est formée entre le disque de réglage (17) et le couvercle (2), dans laquelle est disposé un ressort (16) pressant le disque de réglage (17) contre le disque d'appui (19), une rondelle d'étanchéité (20) pouvant avantageusement être disposée entre le disque d'appui (19) et le corps de base (1).

5. Dispositif d'étranglement selon l'une des revendications 1 à 4, caractérisé en ce que le couvercle (2) est monté de manière étanche aux gaz sur la tige (3), sans possibilité de rotation relative et sans possibilité de déplacement axial.

6. Dispositif d'étranglement selon l'une des revendications 1 à 5, caractérisé en ce qu'un alésage (43) reliant la conduite d'amenée (4) et l'orifice de sortie (42) est ménagé dans le corps de base (1) et dans la région de la pièce rapportée d'étanchéité (12) de la tige (3).

7. Dispositif d'étranglement selon l'une des revendications 1 à 6, caractérisé en ce que le corps de base (1) se rétrécit vers l'intérieur du boîtier, et l'évidement du couvercle (2) s'élargit vers le corps de base (1), de telle sorte que l'enveloppe du couvercle (2) se raccorde sans gradin à l'enveloppe du corps de base (1), le corps de base (1) pouvant par exemple se rétrécir en forme de gradin et le couvercle (2) s'élargir en forme de gradin.

8. Dispositif d'étranglement selon l'une des revendications 1 à 7, caractérisé en ce que le corps de base présente des alésages filetés axiaux (46) qui partent du côté du corps de base qui est éloigné du couvercle et dans lesquels peuvent être vissées des vis (47) traversant la plaque de base (50) et servant à la fixation du dispositif, la plaque de base (50) pouvant avantageusement présenter des alésages (54, 56) disposés concentriquement à l'axe médian longitudinal, et un alésage central qui reçoit le raccord d'amenée (9) vissable sur la tige (3).

9. Dispositif d'étranglement selon l'une des revendications 1 à 8, caractérisé en ce que des rainures (62, 66, 80) sont formées dans le sens périphérique de la tige (3), rainures dont l'une (80) est formée dans la région du corps de base (1), un ressort du corps de base (1) s'engageant dans cette rainure.

10. Dispositif d'étranglement selon l'une des revendications 1 à 9, caractérisé en ce que la tige (3) disposée en position centrale par rapport au boîtier (1, 2) et s'étendant dans le sens longitudinal de ce dernier traverse tant le corps de base (1) que le couvercle (2), avec lequel elle peut avantageusement être assemblée au moyen d'un joint d'étanchéité (36) et d'un jonc d'arrêt (37), qui sont recouverts vers l'extérieur par une bague de retenue (34) assemblée solidairement en rotation à la tige (3).

**0 139 943**

Fig :1

Fig. 2

Fig. 3

Fig. 4